(19) Europäisches Patentamt
European Patent Office
Office européen des brevets

(11) **EP 4 368 286 B1**

(12) **EUROPEAN PATENT SPECIFICATION**

(45) Date of publication and mention of the grant of the patent:
**01.01.2025 Bulletin 2025/01**

(21) Application number: **22869630.8**

(22) Date of filing: **12.05.2022**

(51) International Patent Classification (IPC):
*F01N 3/28* (2006.01)    *B01J 23/63* (2006.01)
*B01D 53/94* (2006.01)    *B01J 35/56* (2024.01)
*B01J 37/02* (2006.01)

(52) Cooperative Patent Classification (CPC):
**F01N 3/2821; B01D 53/94;** F01N 2330/30;
F01N 2330/38; F01N 2510/06; Y02A 50/20

(86) International application number:
**PCT/JP2022/020024**

(87) International publication number:
**WO 2023/042479 (23.03.2023 Gazette 2023/12)**

(54) **HONEYCOMB-TYPE METAL SUBSTRATE AND CATALYTIC CONVERTER**

WABENFÖRMIGER METALLTRÄGER UND KATALYTISCHER KONVERTER

SUPPORT MÉTALLIQUE DE TYPE EN NID D'ABEILLES ET CONVERTISSEUR CATALYTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.09.2021 JP 2021151781**

(43) Date of publication of application:
**15.05.2024 Bulletin 2024/20**

(73) Proprietor: **NIPPON STEEL Chemical & Material Co., Ltd.**
**Tokyo 103-0027 (JP)**

(72) Inventors:
• **INAGUMA, Toru**
**Tokyo 103-0027 (JP)**
• **KONYA, Shogo**
**Tokyo 103-0027 (JP)**
• **MURAMATSU, Kei**
**Tokyo 103-0027 (JP)**
• **GOTO, Yasuhide**
**Tokyo 103-0027 (JP)**
• **NOZAWA, Souhei**
**Tokyo 103-0027 (JP)**

(74) Representative: **J A Kemp LLP**
**80 Turnmill Street**
**London EC1M 5QU (GB)**

(56) References cited:
WO-A1-2018/159556    JP-A- 2005 313 083
JP-A- 2005 334 757    JP-A- 2006 142 138
JP-A- 2009 178 647    JP-A- H0 533 636
JP-A- H11 257 048    JP-B2- 4 762 506
US-B2- 6 953 555

## Description

Technical Field

The present invention relates to a honeycomb-type metal substrate formed by alternately layering a metal flat foil and a metal corrugated foil.

Background Art

As a catalyst substrate for removing pollutants from exhaust gas of internal combustion engines of automobiles or the like, there is known a catalytic converter formed by inserting a honeycomb body made of a heat-resistant alloy into an outer mantle made of a heat-resistant alloy. Among catalytic converters, especially in a metal substrate made of a metal foil, a honeycomb body formed by alternately layering a metal flat foil having a thickness of about 50 μm and a corrugated foil obtained by corrugating the flat foil, or a honeycomb body formed by overlapping and spirally winding strip-shaped flat foil and corrugated foil or the like, have been used.

In recent years, automobile emission regulations have tended to become stricter, and emissions of harmful substances, such as carbon monoxide, hydrocarbons, and nitrogen oxides, especially during a cold start in an emission measurement mode, account for a significant proportion of total emissions; therefore, early activation of the catalyst is required. Hence, there have been proposed various metal substrates in which flat foils and corrugated foils included in metal substrates are subjected to hole-forming processing so as to generate turbulent flows, thereby enhancing the emission control performance.

Patent Literature 1 discloses a technique for improving the flow characteristics inside a honeycomb body and improving substance exchanges between a surface and the flow caused by this improvement by appropriately determining the number, the size, and the distribution of holes, thereby improving the emission control performance.

Patent Literature 2 discloses a catalytic converter excellent in high-temperature durability, mainly including a metal foil in which a plurality of holes are formed and having improved brazing positions. Patent Literature 3 discloses a technique in which in a metal catalyst substrate including a corrugated sheet and a flat sheet in which a plurality of slit holes are formed, annular projections that project from the corrugated sheet and the flat plate at an opening edge of each slit hole are formed, and exhaust gas is caused to collide with the annular projections to cause turbulence, to thereby enhance the emission control performance.

Patent Literature 4 discloses a catalytic converter for removing pollutants from exhaust gas including a metal honeycomb substrate made by machining a stainless steel foil and a catalyst layer formed on the stainless steel foil, the stainless steel foil containing at least Fe, Cr, and Al, an oxide coating film resulting from oxidation of a stainless steel foil component being formed on a surface of the stainless steel foil, the concentration of Fe contained in the oxide coating film being in a range from 0.1% to 7% in terms of mass% relative to the oxide. Patent Literature 4 also discloses that the movement of Fe in the foil into the catalyst layer is reduced by virtue of the oxide coating film containing Fe and thus the deterioration of the catalyst due to Fe is reduced.

The formation of holes in a metal foil used for a honeycomb body as described in Patent Literatures 1 to 3 is accompanied by the formation of burrs on the edges of the holes. The burrs, which are unwanted protrusions, are usually removed by a deburring step.

Citation List

Patent Literature

Patent Literature 1: Japanese Patent No. 4975969
Patent Literature 2: Japanese Patent No. 5199291
Patent Literature 3: Japanese Patent Laid-Open No. 2005-313083
Patent Literature 4: Japanese Patent Laid-Open No. 2007-203256

Summary of Invention

Technical Problem

The present inventors and the like have discovered that emission control performance is improved by leaving a burr formed around a hole. Meanwhile, the present inventors and the like have discovered such a problem that a catalyst around the burr deteriorates due to aging.

An object of the present invention is to improve the emission control performance of a catalytic converter and reduce a deterioration of a catalyst.

Solution to Problem

In order to solve the above-described problem, (A) a honeycomb-type metal substrate formed by alternately layering a metal flat foil and a metal corrugated foil, a plurality of holes being formed in the metal flat foil and the metal corrugated foil, a burr having a small height being formed on an edge of each hole, among the metal flat foil and the metal corrugated foil, at least surfaces of the burrs are covered with an oxide coating film containing $\alpha$-alumina, characterized in that, when a triangle is drawn by connecting the centers of three adjacent holes with lines and an area inside the triangle is defined as an entire area, and areas of parts where the triangle overlaps with the holes are defined as hole areas, a ratio of the hole areas to the entire area is defined as an aperture ratio R, an average hole diameter of the plurality of holes is defined as D, and an average height of the burrs is defined as L, the following expressions (1) to (3) are satisfied

$$0.2 \text{ mm} \leq D \leq 4.0 \text{ mm} \quad (1)$$

$$5\% \leq R \leq 70\% \quad (2)$$

$$0.1 \text{ } \mu\text{m} \leq L \leq 30 \text{ } \mu\text{m} \quad (3).$$

(B) The honeycomb-type metal substrate according to (A), wherein a tip end surface of each burr is formed in a shape extending in a direction orthogonal to a projecting direction of the burr.

(C) The honeycomb-type metal substrate according to (B), wherein the burrs have narrow portions each having a width smaller than the tip end surface.

(D) The honeycomb-type metal substrate according to any one of (A) to (C), wherein the average height of the burrs L satisfies the following expression (4),

$$0.5 \text{ } \mu\text{m} \leq L \leq 20 \text{ } \mu\text{m} \quad (4).$$

(E) A catalytic converter comprising: the honeycomb-type metal substrate according to any one of (A) to (C); and a catalyst layer carried on the metal flat foil and the metal corrugated foil, the average height of the burrs L being smaller than a thickness of the catalyst layer or larger than the thickness of the catalyst layer by a predetermined amount, and the predetermined amount being 10 $\mu$m or less.

(F) A catalytic converter comprising: the honeycomb-type metal substrate according to (D); and a catalyst layer carried on the metal flat foil and the metal corrugated foil, and the average height of the burrs L being smaller than a thickness of the catalyst layer.

(G) In (A) to (F), the oxide coating film may be in a range from 0.05 $\mu$m to 2 $\mu$m in thickness and contain at least 10 mass% or more $\alpha$-alumina.

Advantage Effects of Invention

The present invention makes it possible to achieve both improving the emission control performance of a catalytic converter and reducing a deterioration of a catalyst.

Brief Description of Drawings

[Figure 1] Figure 1 is a perspective view of a catalytic converter.
[Figure 2] Figure 2 is a cross-sectional view of a part of a honeycomb body.
[Figure 3] Figure 3 is a photograph of a cross section of a burr before the shape adjustment.
[Figure 4] Figure 4 is a photograph of the cross section of the burr after the shape adjustment.

[Figure 5] Figure 5 is a schematic view of a tip end surface of the burr extending around a hole.

[Figure 6] Figure 6 is a plan view of the catalytic converter for explaining a method of calculating an average height of the burrs L.

[Figure 7] Figure 7 is a schematic view of a shape adjustment device.

[Figure 8] Figure 8 is a view for explaining an aperture ratio R.

[Figure 9] Figure 9 is a photograph of a cross section of a burr (modification) after the shape adjustment.

[Figure 10] Figure 10 is a cross-sectional view of a part of a honeycomb body (the second embodiment).

Description of Embodiments

(First Embodiment)

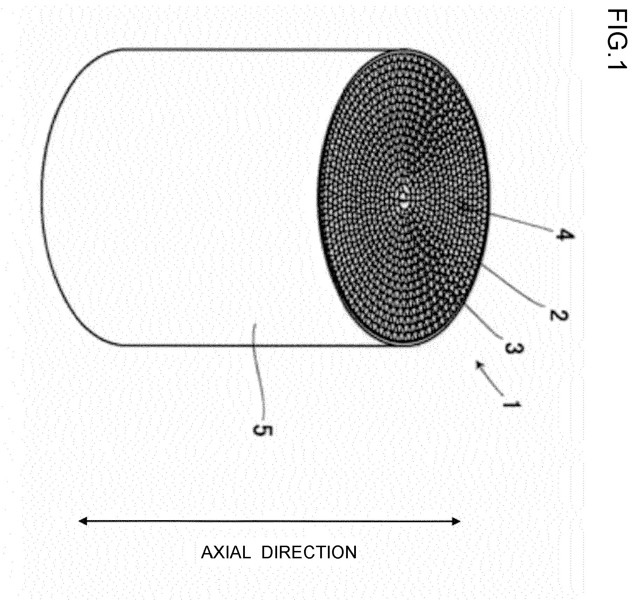

Preferred embodiments of the present invention will be described in detail with reference to the drawings. Figure 1 is a perspective view of a catalytic converter 1, and the axial direction of the catalytic converter 1 is indicated by a double arrow. The catalytic converter 1 includes: a honeycomb body (corresponding to a honeycomb-type metal substrate) 4 formed by spirally winding a flat foil 2 and a corrugated foil 3 into a wound body; and an outer mantle 5 surrounding the outer circumferential surface of the honeycomb body 4. Note that the honeycomb body 4 may also be a layered body formed by alternately layering the flat foil 2 and the corrugated foil 3. Either the wound body or the layered body has a structure in which the flat foil 2 and the corrugated foil 3 are layered when viewed in a cross section. Hence, the honeycomb-type metal substrate as set forth in the claims includes not only the layered body but also the wound body.

A metal foil made of a heat-resistant alloy may be used for the flat foil 2 and the corrugated foil 3. The thickness of the metal foil is preferably 20 $\mu$m or more and 100 $\mu$m or less. The width of the metal foil is preferably 10 mm or more and 500 mm or less. The size of the metal foil may be changed as appropriate depending on the application of the catalytic converter 1. The corrugated foil 3 may be manufactured by corrugating a metal flat foil, for example.

Here, a stainless steel foil containing aluminum is usable as the heat-resistant alloy. A ferritic stainless steel containing Cr: 20 mass%, Al: 3 to 8 mass%, and the balance of Fe and unavoidable impurities is usable as the stainless steel foil of this type.

Note that the heat-resistant alloy applicable to the present invention is not limited to the aforementioned ferritic stainless steel, and various heat-resistant stainless steels containing Al in the alloy composition may be widely used. That is, the metal foil used for the honeycomb body 4 usually contains 15 to 25 mass% of Cr and 2 to 8 mass% of Al, and an Fe-18Cr-3Al alloy, an Fe-20Cr-8Al alloy, etc., may also be used as the heat-resistant alloy.

The catalyst can be supported on the metal foil by applying a predetermined wash-coat liquid to the surface of the metal foil of the honeycomb body 4, and drying and firing this wash-coat liquid. For the wash-coat liquid, for example, a slurry obtained by stirring $\gamma$-alumina powder, lanthanum oxide, zirconium oxide, and cerium oxide in an aqueous solution of palladium nitrate may be used.

For example, stainless steel may be used for the outer mantle 5. The thickness of the outer mantle 5 is preferably 0.5 mm or more and 3 mm or less. The cell density of the honeycomb body 4 is preferably 100 cells to 600 cells per square inch.

The catalytic converter 1 is disposed in a not-shown exhaust pipe of a vehicle in such a manner that an exhaust gas can flow in from one end side and can be discharged from the other end side in the axial direction. Reaction of the catalyst supported on the catalytic converter 1 with the exhaust gas removes pollutants from the exhaust gas having flowed into the catalytic converter 1.

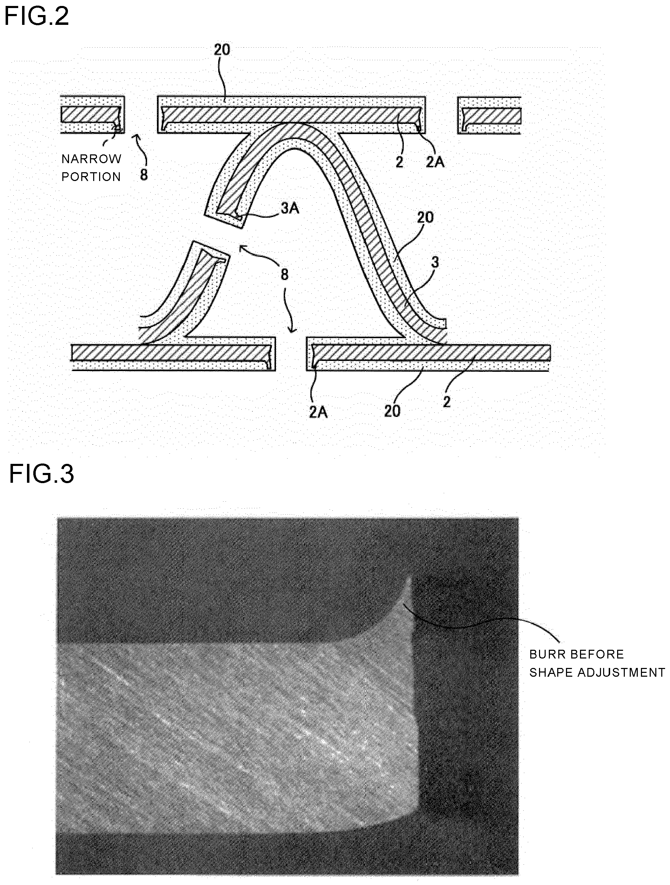

Figure 2 is a cross-sectional view of a part of the honeycomb body 4 cut in the radial direction. The flat foil 2 and the corrugated foil 3 each include a plurality of holes 8 penetrating the foil in the thickness direction. The arrangement of the holes 8 is not particularly limited, for example, in a developed state before being formed into the honeycomb body 4, the metal foil in which the holes 8 are formed in a checkerboard pattern or a zigzag pattern may be used. Normally, a gas flow in the metal substrate including the metal foil with no holes is a laminar flow. When the metal foil has holes, the Reynolds number is partially increased in portions having the holes, and turbulence is likely to be generated; and as a result, the emission control performance is improved. However, excessive turbulence is not preferable because this causes increase in pressure loss. The present invention suppresses excessive turbulence by limiting the hole diameter and the aperture ratio of the holes 8 to predetermined ranges and by limiting the heights of the burrs to small heights; and deterioration in emission control performance due to the limitation on the turbulence is compensated for by the reaction source (in other words, the fire source) effect of burrs. This will be described later in detail.

A burr 2A that is buried in a catalyst layer 20 and extends in the circumferential direction is formed on the edge of each hole 8 of the flat foil 2. A burr 3A that is buried in the catalyst layer 20 and extends in the circumferential direction is formed on the edge of each hole 8 of the corrugated foil 3. The burrs 2A, 3A are projections that are naturally formed at the time of forming holes in the metal foil using a hole-opening tool, and are also called flashes. Because burrs are generally unnecessary projections, they are removed in a deburring step; however, in the present invention, by performing the shape adjustment step, burrs are left as a structure for improving the emission control performance. Although the type of hole-opening tool is not particularly limited, continuous hole-forming can be performed using a die of a punching press, a rotary punching machine, or the like.

An oxide coating film containing $\alpha$-alumina is formed on surfaces of the flat foil 2 and the corrugated foil 3. The oxide coating film is also formed on surfaces of the burrs 2A, 3A. The oxide coating film is formed on the surfaces of the flat foil 2 and the corrugated foil 3 (including the surfaces of the burrs) by heating the honeycomb body 4 under an oxidizing atmosphere having a temperature exceeding 800°C. In a case where the metal foil used as the flat foil 2 and the corrugated foil 3 is a ferritic stainless steel foil containing Cr: 20 mass%, Al: 3 to 8 mass%, and the balance of Fe and unavoidable impurities , an oxide coating film containing at least 10 mass% or more $\alpha$-alumina is formed on a surface of the stainless steel foil by applying the above-described oxidation treatment (a heat treatment) to the honeycomb body 4. The oxide coating film may contain a Cr oxide and an Fe oxide in addition to $\alpha$-alumina.

A thickness of the oxide coating film is preferably in a range from 0.05 $\mu$m to 2 $\mu$m. As long as the thickness of the oxide coating film containing at least 10 mass% or more $\alpha$-alumina is 0.05 $\mu$m or more, it is possible to reduce a deterioration of the catalyst due to aging. Reducing the thickness of the oxide coating film to 2 $\mu$m or less makes it possible to reduce the lowering of the durability of the flat foil 2 and the corrugated foil 3. The thickness of the oxide coating film increases with an increase in content of the aluminum contained in the stainless steel foil.

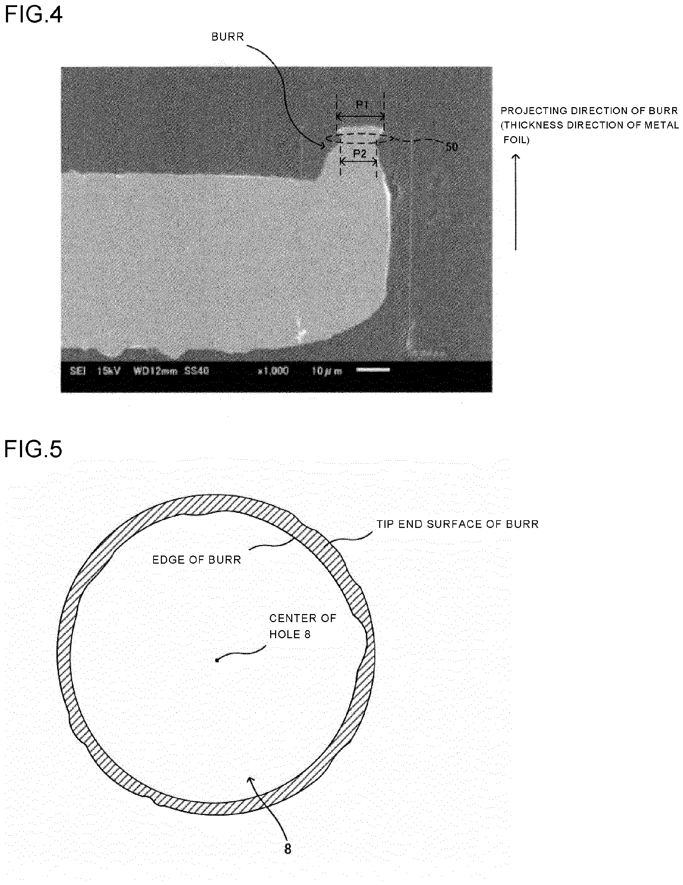

The structure of the burrs 2A, 3A will be described in detail with reference to Figure 3, Figure 4, and Figure 5. Figure 3 is a photograph of a cross section of a burr before the shape adjustment (in other words, a burr immediately after punching). Figure 4 is a photograph of the cross section of the burr after the shape adjustment. Figure 5 is a schematic view showing the tip end surface of the burr extending around the hole.

With reference to Figure 3, the burr before the shape adjustment has a sharp tip end; thus, when the catalyst layer is formed on the flat foil (corrugated foil), the burr projects excessively from the catalyst layer. In this case, an exhaust gas collides with the burrs projecting from the catalyst layer, which causes excessive turbulence and increase in pressure loss.

Referring to Figure 4, the tip end surfaces of the burrs 2A, 3A extend in a direction orthogonal to the projecting direction of the burrs. The projecting direction of the burrs is thickness direction of the metal foil. As indicated by hatching in Figure 5, the term "extend" means that "the tip end surfaces of the burrs 2A, 3A are present and spread in the radial direction from the edges of the holes 8"; and the degree of spreading at each circumferential position is not necessarily uniform. In addition, the tip end surfaces of the burrs 2A, 3A may be flat or have fine irregularities formed thereon.

Further, as shown in Figure 4, the burrs 2A, 3A are each formed to have a narrow portion 50; and when the width of the tip end surface is defined as P1 and the width of the narrow portion 50 is defined as P2, the magnitude relationship between P1 and P2 is P1 > P2. The width means a width in the radial direction of each hole 8.

The emission control performance of the catalytic converter 1 can be improved by providing the burrs 2A, 3A with small heights. The reason is speculated as follows. The burrs 2A, 3A having small heights have a small heat capacity and tend to increase in temperature when the exhaust gas flows in. On the other hand, since these burrs are buried in the catalyst layer 20, accumulated heat is difficult to be deprived by the gas. Hence, expansion of a catalytic reaction region starting from the burrs occurs although the exhaust gas temperature is low, and thus the catalytic reaction of the honeycomb body 4 as a whole is activated.

In other words, the catalyst supported on and around the burrs acts as reaction sources that determine the start and end of the catalytic reaction, and the catalytic reaction can be activated at an early stage by lowering the temperature of the exhaust gas when the reaction sources generate and disappear. In the following description, the effect by the burrs 2A, 3A is also referred to as the reaction source effect. By forming each tip end surface of the burrs 2A, 3A into a shape extending in the direction orthogonal to the projecting direction of the burr, as compared with a burr having the same height and a sharp tip end (including a burr of the second embodiment described later), the contact area with the catalyst is increased and thereby the above-described reaction source effect can be enhanced.

Meanwhile, the present inventors and the like have discovered such a problem that when an exhaust gas is purified using the catalytic converter 1 with no oxide coating film formed on the flat foil 2 and the corrugated foil 3 (i.e., a catalytic converter out of the scope of the present invention), a deterioration of the catalyst due to aging is increased. As a result of a detailed study about this problem, it has been presumed that the catalyst near the burrs 2A, 3A experiences an abnormal rise in temperature and deteriorates. Then, it has been found that a means for reducing the deterioration of the catalyst is the formation of an oxide coating film containing $\alpha$-alumina on each of the surfaces of the burrs 2A, 3A. In other words, a heat transfer between the burrs 2A, 3A and the catalyst is accelerated by virtue of the formation of an oxide coating film containing $\alpha$-alumina on each of the surfaces of the burrs 2A, 3A. This makes it possible to prevent an abnormal rise in the temperature of the catalyst and reduce the deterioration of the catalyst due to aging.

The average height of the burrs 2A, 3A (hereinafter, also referred to as an average height of the burrs L) after the shape adjustment is 0.1 $\mu$m or more and 30 $\mu$m or less, preferably 0.5 $\mu$m or more and 20 $\mu$m or less. By adjusting the height of the burrs 2A, 3A to 0.1 $\mu$m or more and 30 $\mu$m or less, the reaction source effect can be exerted.

When the average height of the burrs L is reduced to less than 0.1 $\mu$m, heat energy accumulated in the burrs 2A, 3A becomes too small to sufficiently exert the reaction source effect. When the average height of the burrs L becomes more than 30 $\mu$m, the tip ends of the burrs 2A, 3A projecting through the catalyst layer 20 come into contact with the gas, to release the heat; therefore, the reaction source effect becomes difficult to be exerted, and the exhaust gas comes into contact with the burrs 2A, 3A to generate turbulence and increase the pressure loss. By limiting the average height of the burrs L to 0.5 $\mu$m or more and 20 $\mu$m or less, the aforementioned reaction source effect and the like can be obtained more easily.

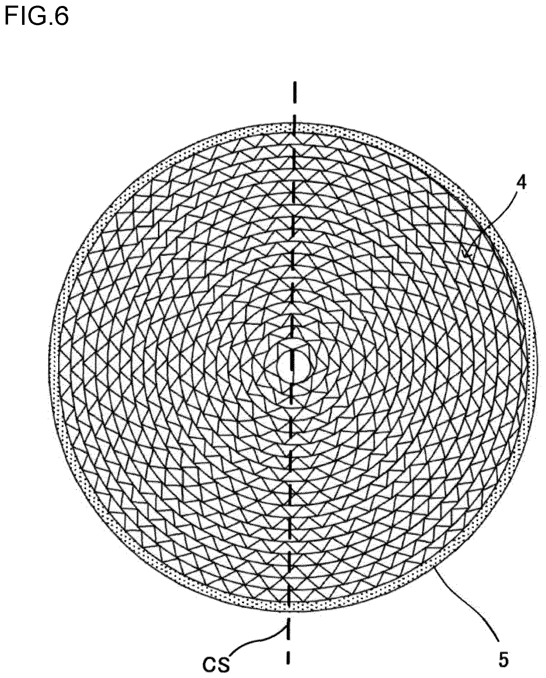

Figure 6 is a plan view of the catalytic converter 1 as viewed from the axial direction. With reference to this drawing, the average height of the burrs L can be found by cutting the converter 1 along a plane including the central axis ("CS" indicated by a dotted line) and measuring the height of every burr appearing on this cut surface using image analysis, then summing up these measurements, and further dividing this summed value by the number of measurements. When the measurement is performed, it is desirable to fill gas flow passages (gaps) of the honeycomb body 4 with resin. The burr height can be found from a difference between the foil thickness of the metal foil and the length from one end in the foil thickness direction of the metal foil to the tip end of the burr.

As another measurement method, the burr height of every hole 8 can be found by unwinding the honeycomb body 4, and subsequently imaging the metal foil (the flat foil 2 or the base material of the corrugated foil 3) by an image-size measurement device equipped with an imaging device (CMOS sensor, etc.) to obtain an image along the circumferential direction of the hole 8. In this case, the average height of the burrs L can be found by dividing the summed value of the measured burr heights by the number of measurements.

Further, after the honeycomb body 4 is unwound, the burr height of every hole 8 formed in the metal foil (the base material of the flat foil 2 or the corrugated foil 3) can be found using a micrometer. The average height of the burrs L can be found by dividing the summed value of the measured burr heights by the number of measurements.

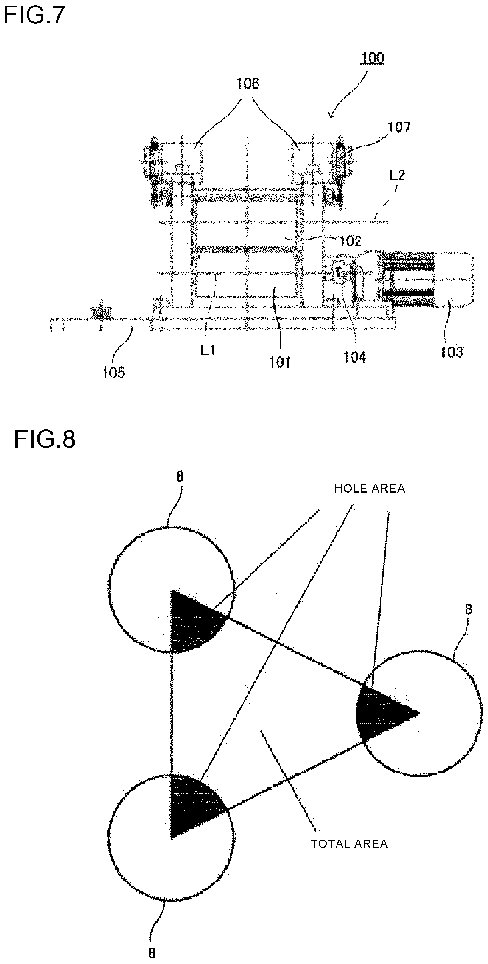

The adjustment method for adjusting the shapes of the burrs 2A, 3A will be described with reference to Figure 7. Figure 7 is a schematic view of a shape adjustment device as viewed from the feeding side of the metal foil. The shape adjustment device 100 includes a drive roller 101, a driven roller 102, a drive motor 103, a transmission mechanism 104, a fixing stand 105, a hydraulic mechanism 106, and a digital indicator 107. The drive motor 103 is connected to the drive roller 101 via the transmission mechanism 104, and when the drive motor 103 is operated, driving force of the drive motor 103 is transmitted to the drive roller 101 via the transmission mechanism 104 and thereby the drive roller 101 rotates around a rotation axis L1.

The driven roller 102 is arranged immediately above the drive roller 101 and is pushed toward the approaching side to the drive roller 101 by the hydraulic mechanism 106. Therefore, the driven roller 102 rotates along with the drive roller 101. The metal foil can be slipped in between the drive roller 101 and the driven roller 102 (i.e., a nip part).

The nip pressure between the drive roller 101 and the driven roller 102 can be adjusted by the hydraulic mechanism 106. The nip pressure can be measured by the indicator 107. Not-shown guide rollers are arranged upstream of the drive roller 101 and the driven roller 102. The hydraulic mechanism 106, a gearbox of the transmission mechanism 104, and the drive motor 103 are fixed onto the fixing stand 105.

In the above-described configuration, a metal foil having holes with burrs formed by a punching device is prepared, and this foil is fed into the nip part between the drive roller 101 and the driven roller 102 via the not-shown guide rollers. The drive roller 101 is brought to rotate clockwise as viewed from the drive motor 103 side, the metal foil is pulled into the nip part between the drive roller 101 and the driven roller 102, and the drive roller 101 (the driven roller 102) comes into contact with the burrs of the metal foil.

When the drive roller 101 and the driven roller 102 are further brought to rotate, the burrs are pressed and crushed by these rollers to form the narrow portions 50 of the burrs 2A, 3A. It is preferable to previously obtain the nip pressure used for forming the burrs 2A, 3A as desired through experiments or the like. Note that the metal foil for the corrugated foil 3 is conveyed to a corrugated-foil formation step after the shape adjustment by the shape adjustment device 100. In the corrugated-foil formation step, for example, the corrugated foil 3 can be manufactured by bringing a gear having a shape corresponding to the shape of the corrugated foil to contact with the metal foil to plastically deform this metal foil.

The shape adjustment method of the burrs 2A, 3A is not limited to the method by the shape adjustment device 100; and for example, in the punching step of the metal foil, the shape adjustment may be performed by arranging a baffle plate to reduce the projections of the burrs. In this case, the burrs formed at the time of punching abut to the baffle plate to be plastically deformed and thereby the burrs 2A, 3A as shown in Figure 2 can be formed at the edges of the holes 8.

The thickness of the catalyst layer 20 can be appropriately set in relationship with the average height of the burrs L. That is, as described above, as the amount of projection of the burrs 2A, 3A projecting from the catalyst layer 20 becomes greater, deterioration of the reaction source effect and generation of turbulence become more significant. Therefore, when the thickness of the catalyst layer 20 is set to be equal to or larger than the average height of the burrs L or when the average height of the burrs L is larger than the catalyst layer 20, it is preferable to limit the difference (equivalent to a predetermined amount) between the average height of the burrs L and the thickness of the catalyst layer 20 to 10 $\mu$m or less.

Here, when the average hole diameter of the holes 8 is defined as D, the average hole diameter D is 0.2 mm or more and 4.0 mm or less. The hole diameter of each hole 8 is a diameter thereof. When the average hole diameter D falls below 0.2 mm, the productivity of the catalytic converter 1 would lower.

When the average hole diameter D is greater than 4.0 mm, the sum of edge lengths of the holes 8 (that is, the total edge length of the holes 8 in the entire the honeycomb body 4) becomes smaller, and even by providing the burrs, the total length of the burrs is too short to sufficiently improve the emission control performance. It should be noted that if the average hole diameter D falls below 1.1 mm, there would be a possibility that the catalyst closes the holes 8 to lower the emission control performance. Accordingly, it is desirable to use a catalyst with a low viscosity in a case where the average hole diameter D is less than 1.1 mm.

In the above-described embodiment, it is exemplified that the shape of each hole 8 is circular; however, this may be other shapes. Other shapes may include various shapes, such as elliptic or rectangular. In any of these shapes, the hole diameter can be found by converting the area into a circle.

The hole diameter of each hole 8 can be controlled by a punch diameter and a die diameter of a die. The hole diameter of each hole 8 is not necessarily to be the same; however, from the viewpoint of easiness of the machining, etc., it is preferable to manufacture the holes such that the standard deviation $\sigma$ is 0.001 mm or more and 0.5 mm or less.

When the aperture ratio of the holes 8 is defined as R, the aperture ratio R is 5% or more and 70% or less, and preferably 20% or more and 70% or less. Here, the aperture ratio R is a value calculated as a ratio of a sum total of areas of blackened holes to an entire area surrounded by a triangle as shown in Figure 8. That is, when a triangle is drawn by connecting the centers of three adjacent holes 8 with lines and an area inside the triangle is defined as an entire area, and areas of parts where the triangle overlaps with the holes 8 are defined as hole areas, a ratio of the hole areas to the entire area is defined as the aperture ratio R.

When the aperture ratio R is decreased to less than 5%, the sum of the edge lengths of the holes 8 becomes too small to sufficiently improve the emission control performance even by providing the burrs. When the aperture ratio R is more than 70%, the rigidity of the honeycomb body 4 becomes decreased, so that cracks and fractures of the flat foil 2 and the corrugated foil 3 might result in an early failure of the catalytic converter 1.

(Modifications)

Modifications of the present invention will be described. In the catalytic converter 1 of the present modification, the burrs 2A, 3A include burrs having no narrow portions.

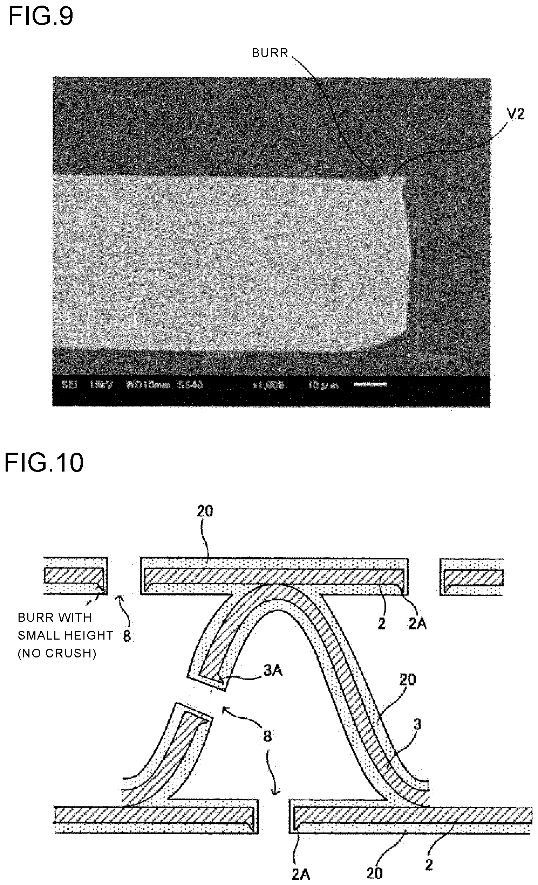

In the present modification, for convenience of explanation, a burr having a narrow portion (that is, the burr shown in Figure 4) is referred to as a burr V1, and a burr having no narrow portion (that is, the burr shown in Figure 9) is referred to as a burr V2.

The present inventors have confirmed that the burrs V1 relatively decrease and the burrs V2 relatively increase as the pressure of the roll press increases.

Also in the catalytic converter 1 where the burrs V1 and V2 are mixed, it is possible to obtain the same effect as that of the first embodiment, such as the reaction source effect, by satisfying the predetermined numerical conditions.

Although already having been described in the first embodiment, the predetermined numerical conditions are described again, and these are 0.2 mm $\leq$ D $\leq$ 4.0 mm, 5% $\leq$ R $\leq$ 70%, 0.1 $\mu$m $\leq$ L $\leq$ 30 $\mu$m.

Figure 9 is a photograph of the burr V2. With reference to this drawing, the burr V2 is the same as the burr V1 in that the tip end surface extends in a direction orthogonal to the projecting direction of the burr, and is different from the burr V1 in that the burr V2 has no narrow portion 50.

This might be presumed that when a needle-like burr is pressed by the shape adjustment device 100 while the hydraulic pressure of the hydraulic mechanism 106 is increased, a narrow portion like that of the burr V1 is first formed, and when the pressure is further increased, the narrow portion is crushed into a step-like burr having no narrow portion 50, as shown in Figure 9.

In the case in which the burrs V1 and V2 are mixed as in the present embodiment, the burr height may be found without distinguishing these burrs so as to calculate the average height of the burrs L.

(Second Embodiment)

The second embodiment of the present invention will be described with reference to Figure 10. Figure 10 corresponds to Figure 2, and is a cross-sectional view of a part of the honeycomb body. Components having common functions to those of the first embodiment are denoted by the same reference numerals. In the burrs 2A, 3A of the present embodiment, the shape adjustment step is not performed, and the average height L of the burrs 2A is set to 0.1 $\mu$m or more and 30 $\mu$m or less. Specifically, by increasing the punching speed of the punching press, the height of the burr 2A can be reduced and the average height L of the burrs 2A can be reduced to 0.1 $\mu$m or more and 30 $\mu$m or less. The punching speed of the punching press is preferably 100 mm/sec or more.

Therefore, the burr 2A of the present embodiment has a general burr shape with a sharp tip end (i.e., a needle-like tip end), which is different from the burr shape of the first embodiment having the tip end surface extending in the direction orthogonal to the projecting direction of the burr. The other configurations are the same as those of the first embodiment; therefore, detailed description thereof is omitted, but the summary is as follows.

The thickness and the material of the metal foil forming the flat foil 2 and the corrugated foil 3, the catalyst, and the outer mantle 5 are the same as those in the first embodiment. Additionally, the second embodiment is also similar to the first embodiment in that an oxide coating film containing $\alpha$-alumina is also formed on the flat foil 2 and the corrugated foil 3 (including the burrs).

The average height of the burrs L of the burrs 2A, 3A is preferably 0.5 $\mu$m or more and 20 $\mu$m or less, which is the same as that in the first embodiment. The method of measuring the average height of the burrs L is also the same as that in the first embodiment.

As the amount of projection of the burrs 2A, 3A projecting from the catalyst layer 20 becomes greater, deterioration of the reaction source effect and generation of turbulence become more significant. Therefore, when the thickness of the catalyst layer 20 is set to be equal to or larger than the average height of the burrs L, or when the average height of the burrs L is larger than the catalyst layer 20, it is preferable to set the difference between the average height of the burrs L and the thickness of the catalyst layer 20 (equivalent to the predetermined amount) to 10 $\mu$m or less.

The average hole diameter D is 0.2 mm or more and 4.0 mm or less, which is also the same as in the first embodiment. The shape of the hole 8 is not limited to circular, as in the first embodiment. It is preferable to manufacture the holes such that the standard deviation $\sigma$ is 0.001 mm or more and 0.5 mm or less, which is the same as in the first embodiment. The aperture ratio R of the holes 8 is 5% or more and 70% less, preferably 20% or more and 70 % or less, which is the same as in the first embodiment.

As described above, by providing the burrs 2A, 3A of the present embodiment, it is possible to obtain the same effect as that of the first embodiment.

Examples

(Example 1)

In the present Embodiment example, an emission control performance, a deterioration of a catalyst and a pressure loss performance were evaluated by variously changing the average height of the burrs L. Table 1 shows the result of the evaluation. The emission control performance was evaluated by T80°C (i.e., T80°C before aging). T80°C is a temperature when CO conversion (%), calculated based on the CO conversion-temperature curve, reaches 80%. The CO conversion-temperature curve was obtained by feeding a simulated gas through a catalytic converter at an SV (space velocity) of 100,000 h$^{-1}$, gradually heating the simulated gas using a heater from a room temperature, and measuring the CO conversion (%) at each temperature. Using THC (propylene, $C_3H_6$): 550 ppm (1650 ppmC), NO: 500 ppm, CO: 0.5%, $O_2$: 1.5%, $H_2O$: 10%, $N_2$: a balance gas, a diesel exhaust gas was simulated. The emission control performance of the catalytic converter can be evaluated to be higher with the lowering of T80°C.

The deterioration of the catalyst was evaluated on the basis of a difference between "T80°C after aging" and "T80°C before aging." The "T80°C after aging" was obtained by heating the catalytic converter under heating conditions including a heating temperature: 980°C and a heating time: 20 hours, cooling the catalytic converter to a room temperature, and then measuring a T80°C by the already described method. The deterioration of the catalyst can be evaluated to be lower with a decrease in the difference.

The pressure loss performance was evaluated by applying a dried 25°C $N_2$ gas at a flow rate of 0.12 Nm$^3$/min and measuring a difference in pressure before and after the catalytic converter.

As the metal foil used for the corrugated foil and the flat foil, a ferritic stainless steel containing Cr: 20 mass%, Al: 5 mass%, and the balance of Fe and unavoidable impurities was used. The thickness of the metal foil was 30 $\mu$m. Using a punching press, holes were formed in a region excluding ends (respective ranges of 5 mm from the exhaust gas inlet side and from the exhaust gas outlet side) of a honeycomb body. The average height of the burrs L was controlled by adjusting the punching speed of the punching press without performing a height adjustment through a shape adjustment device. The average height of the burrs L was measured by the method described in the embodiment as described with reference to Figure 6 (the same applies to other Embodiment examples described later).

A region of the metal foil where the holes were formed was imaged from the foil thickness direction of the metal foil, and contours of the holes were converted into data; and thereafter, the hole diameter was found by converting the obtained hole diameter to a circle diameter through computer processing. The aperture ratio R was found by the method described in the above embodiment.

After the metal foil obtained by the above-described processing was corrugated into a corrugated foil, the corrugated foil with a brazing material at appropriate positions was laid on the flat foil coated, and these foils were wound together, and were subjected to heat treatment (brazing), to thereby produce the honeycomb body. The diameter of the honeycomb body was 35 mm, and the axial length was 80 mm. The cell density was 400 cpsi. The honeycomb body thus produced was inserted into an outer mantle and fixed thereto by brazing to provide the catalytic converter. The diameter of the catalytic converter was 38 mm, and the axial length was 80 mm.

A wash-coat liquid containing ceria-zirconia-lanthana-alumina as main components and containing 1.25 g of palladium per 100 g was brought to pass through the honeycomb body, and an excessive wash-coat liquid was removed; and thereafter, the honeycomb body was dried at 180°C for 1 hour and then baked at 500°C for 2 hours to form a catalyst layer with a thickness of 20 $\mu$m on the honeycomb body.

It should be noted that the viscosity of the wash-coat liquid was adjusted in use, if necessary, so that none of the holes was closed by the catalyst.

As for Nos. 3 to 10, an oxide coating film was formed by applying the heat treatment to the honeycomb body prior to the formation of a catalyst layer. The conditions for the heat treatment were a heating temperature: 900°C and a heating time: two hours.

[Table 1]

| No. | Oxide Coating Film | | Average height of burrs (μm) | Hole diameter (mm) | Aperture ratio (%) | Evaluation | | | | Note |
| | α-alumina (%) | Thickness (μm) | | | | T80°C (i) | Pressure loss (Pa) | T80°C after aging ② | Difference between before and after aging °C②-① | |
|---|---|---|---|---|---|---|---|---|---|---|
| 1 | 0 | 0 | 0 | 0.9 | 40 | 195 | 87 | 270 | 75 | Comparative Example 1 |
| 2 | 0 | 0 | 5 | 0.9 | 40 | 184 | 87 | 269 | 85 | Comparative Example 2 |
| 3 | 80 | 0.3 | 0 | 0.9 | 40 | 195 | 87 | 270 | 75 | Comparative Example 3 |
| 4 | 80 | 0.3 | 0.1 | 0.9 | 40 | 190 | 87 | 259 | 69 | Invention Example 1 |
| 5 | 80 | 0.3 | 1 | 0.9 | 40 | 187 | 87 | 252 | 65 | Invention Example 2 |
| 6 | 80 | 0.3 | 5 | 0.9 | 40 | 184 | 87 | 248 | 64 | Invention Example 3 |
| 7 | 80 | 0.3 | 10 | 0.9 | 40 | 183 | 87 | 247 | 64 | Invention Example 4 |
| 8 | 80 | 0.3 | 20 | 0.9 | 40 | 186 | 87 | 250 | 64 | Invention Example 5 |
| 9 | 80 | 0.3 | 30 | 0.9 | 40 | 190 | 93 | 255 | 65 | Invention Example 6 |
| 10 | 80 | 0.3 | 40 | 0.9 | 40 | 194 | 110 | 264 | 70 | Comparative Exam ple 4 |

No. 1 and No. 3, which had no burr, were low in emission control performance (T80°C). No. 2 was high in emission control performance (T80°C) by virtue of burrs but experienced a significantly increased deterioration of the catalyst due to the absence of an oxide coating film. No. 4 to No. 9 were high in emission control performance (T80°C) by virtue of burrs and the deterioration of the catalyst was also able to be kept low. Additionally, the pressure loss was also able to be maintained at a low value. No. 10 had burrs considerably projecting from the catalyst layer (projecting from the catalyst layer by 20 $\mu$m), so that the pressure loss increased due to the generation of a turbulent flow and the emission control performance (T80°C) deteriorated due to the lowering of the reaction source effect.

(Example 2)

The thickness of the oxide coating film and the content of $\alpha$-alumina were variously changed and the emission control performance (T80°C), the deterioration of the catalyst, and the pressure loss performance were evaluated. The thickness of the oxide coating film and the content of $\alpha$-alumina were adjusted by adjusting heat treatment conditions for forming the oxide coating film within ranges of a heating temperature: 1000°C to 1100°C and a heating time: 5 minutes to 20 hours. The average height of the burrs L was standardized at 5 $\mu$m by adjusting the punching speed of the punching press without performing a height adjustment through a shape adjustment device as in Example 1. The foil thickness of the metal foil was 40 $\mu$m. The honeycomb body was 40 mm in diameter and 60 mm in axial length. A cell density was 400 cpsi. The produced honeycomb body was loaded in an outer mantle and fixed by a brazing treatment to provide a catalytic converter. The catalytic converter was 43 mm in diameter and 60 mm in axial length. The hole diameter and the aperture ratio were unified at 2 mm and 50%, respectively. The other conditions were similar to those of Example 1.

[Table 2]

| No. | Oxide Coating Film | | Average height of burrs (μm) | Hole diameter (mm) | Aperture ratio (%) | Evaluation | | | | Note |
| --- | --- | --- | --- | --- | --- | --- | --- | --- | --- | --- |
| | α-alumina (%) | Thickness (μm) | | | | T80°C (i) | Pressure loss (Pa) | T80°C after aging ② | Difference between before and after aging °C②-① | |
| 11 | 0 | 0 | 5 | 2 | 50 | 190 | 52 | 265 | 75 | Comparative Exam ple 5 |
| 12 | 80 | 0.03 | 5 | 2 | 50 | 191 | 52 | 266 | 75 | Comparative Exam ple 6 |
| 13 | 80 | 0.05 | 5 | 2 | 50 | 190 | 52 | 260 | 70 | Invention Example 7 |
| 14 | 80 | 0.1 | 5 | 2 | 50 | 190 | 52 | 255 | 65 | Invention Example 8 |
| 15 | 80 | 0.5 | 5 | 2 | 50 | 190 | 52 | 254 | 64 | Invention Example 9 |
| 16 | 80 | 10 | 5 | 2 | 50 | 191 | 52 | 254 | 63 | Invention Example 10 |
| 17 | 80 | 2.0 | 5 | 2 | 50 | 190 | 52 | 254 | 64 | Invention Example 11 |
| 18 | 80 | 2.5 | 5 | 2 | 50 | 190 | 52 | Foil Cracking | | Comparative Exam ple 7 |
| 19 | 5 | 0.5 | 5 | 2 | 50 | 190 | 52 | 266 | 76 | Comparative Exam ple 8 |
| 20 | 10 | 0.5 | 5 | 2 | 50 | 190 | 52 | 260 | 70 | Invention Example 12 |
| 21 | 30 | 0.5 | 5 | 2 | 50 | 191 | 52 | 256 | 65 | Invention Example 13 |
| 22 | 50 | 0.5 | 5 | 2 | 50 | 190 | 52 | 253 | 63 | Invention Example 14 |
| 23 | 100 | 0.5 | 5 | 2 | 50 | 190 | 52 | 252 | 62 | Invention Example 15 |

Regarding No. 12, the thickness of the oxide coating film merely reached 0.03 $\mu$m, so that the deterioration of the catalyst increased. Regarding No. 18, the thickness of the oxide coating film exceeded 2.0 $\mu$m, so that an evaluation of T80°C after aging was not possible due to the occurrence of foil cracking. Regarding No. 19, $\alpha$-alumina contained in the oxide coating film was as little as 5 mass%, so that the deterioration of the catalyst increased. It has been found from the present example that the formation of a 0.05 $\mu$m to 2 $\mu$m oxide coating film containing at least 10 mass% $\alpha$-alumina makes it possible to effectively reduce the deterioration of the catalyst.

(Example 3)

In the present example, the average hole diameter D and the aperture ratio R were variously changed and the resulting emission control performance (T80°C), the pressure loss performance, and the deterioration of the catalyst were evaluated. The average height of the burrs L was unified at 8 $\mu$m by adjusting the punching speed of the punching press without performing a height adjustment through a shape adjustment device as in Example 1. The foil thickness of the metal foil was 50 $\mu$m. The honeycomb body was 51 mm in diameter and 120 mm in axial length. A cell density was 300 cpsi. The produced honeycomb body was loaded in an outer mantle and fixed by a brazing treatment to provide a catalytic converter. The catalytic converter was 54 mm in diameter and 120 mm in axial length.

[Table 3]

| No. | Oxide Coating Film | | Average height of burrs (μm) | Hole diameter (mm) | Aperture ratio (%) | Evaluation | | | | Note |
|---|---|---|---|---|---|---|---|---|---|---|
| | α-alumina (%) | Thickness (μm) | | | | T80°C (i) | Pressure loss (Pa) | T80°C after aging ② | Difference between before and after aging °C②-① | |
| 24 | 98 | 0.9 | 8 | 0.2 | 20 | 200 | 48 | 268 | 68 | Invention Example 16 |
| 25 | 98 | 0.9 | 8 | 0.5 | 20 | 197 | 49 | 264 | 67 | Invention Example 17 |
| 26 | 98 | 0.9 | 8 | 0.9 | 20 | 194 | 49 | 254 | 60 | Invention Example 18 |
| 27 | 98 | 0.9 | 8 | 1.1 | 20 | 193 | 51 | 251 | 58 | Invention Example 19 |
| 28 | 98 | 0.9 | 8 | 2.0 | 20 | 191 | 52 | 248 | 57 | Invention Example 20 |
| 29 | 98 | 0.9 | 8 | 3.0 | 20 | 193 | 52 | 253 | 60 | Invention Example 21 |
| 30 | 98 | 0.9 | 8 | 4.0 | 20 | 195 | 54 | 258 | 63 | Invention Example 22 |
| 31 | 98 | 0.9 | 8 | 5.0 | 20 | 208 | 55 | 274 | 66 | Comparative Example 9 |
| 32 | 98 | 0.9 | 8 | 2.5 | 3 | 208 | 48 | 277 | 69 | Comparative Example 10 |
| 33 | 98 | 0.9 | 8 | 2.5 | 5 | 200 | 50 | 269 | 69 | Invention Example 23 |
| 34 | 98 | 0.9 | 8 | 2.5 | 10 | 196 | 51 | 261 | 65 | Invention Example 24 |
| 35 | 98 | 0.9 | 8 | 2.5 | 20 | 190 | 53 | 254 | 64 | Invention Example 25 |
| 36 | 98 | 0.9 | 8 | 2.5 | 30 | 189 | 54 | 252 | 63 | Invention Example 26 |

EP 4 368 286 B1

14

(continued)

| No. | Oxide Coating Film | | Average height of burrs (μm) | Hole diameter (mm) | Aperture ratio (%) | Evaluation | | | | Note |
| --- | α-alumina (%) | Thickness (μm) | | | | T80°C (i) | Pressure loss (Pa) | T80°C after aging ② | Difference between before and after aging °C②-① | |
| 37 | 98 | 0.9 | 8 | 2.5 | 40 | 185 | 54 | 247 | 62 | Invention Example 27 |
| 38 | 98 | 0.9 | 8 | 25 | 50 | 185 | 56 | 247 | 62 | Invention Example 28 |
| 39 | 98 | 0.9 | 8 | 25 | 60 | 184 | 59 | 249 | 65 | Invention Example 29 |
| 40 | 98 | 0.9 | 8 | 2.5 | 70 | 182 | 60 | 251 | 69 | Invention Example 30 |
| 41 | 98 | 0.9 | 8 | 2.5 | 80 | 182 | 61 | Foil Cracking | | Comparative Example 11 |

Referring to Nos. 24 to 30, it has been found that providing burrs makes it possible to secure a desired emission control performance (T80°C) even though the average hole diameter D is small. Regarding No. 31, it was not possible to improve the emission control performance (T80°C) due to the excessively large average hole diameter D and the short total length of the burrs. Regarding No. 32, it was not possible to improve the emission control performance due to the excessively small aperture ratio and the short total length of the burrs. Regarding No. 41, the aperture ratio exceeded 70% and foil cracking of the metal foil was seen after aging, so that the deterioration of the catalyst was not evaluated.

(Example 4)

In the present example, a test was performed under conditions similar to those of Example 1 except that the average height of the burrs L was adjusted using a shape adjustment device. It should be noted that as for Nos. 45 to 46, it was observed that 30%, approximately, were the burrs V2 and the others were the burrs V1 having narrow portions. As for Nos. 46 to 51, the burrs V1 having narrow portions were dominant.

[Table 4]

| No. | Oxide Coating Film | | Average height of burrs (μm) | Hole diameter (mm) | Aperture ratio (%) | Evaluation | | | | Note |
| | α-alumina (%) | Thickness (μm) | | | | T80°C (i) | Pressure loss (Pa) | T80°C after aging ② | Difference between before and after aging °C②-① | |
|---|---|---|---|---|---|---|---|---|---|---|
| 42 | 0 | 0 | 0 | 0.9 | 40 | 195 | 87 | 270 | 75 | Comparative Example 12 |
| 43 | 0 | 0 | 5 | 0.9 | 40 | 182 | 87 | 267 | 85 | Comparative Example 13 |
| 44 | 80 | 0.3 | 0 | 0.9 | 40 | 195 | 87 | 270 | 75 | Comparative Example 14 |
| 45 | 80 | 0.3 | 0.1 | 0.9 | 40 | 188 | 87 | 257 | 69 | Invention Example 31 |
| 46 | 80 | 0.3 | 1 | 0.9 | 40 | 185 | 87 | 250 | 65 | Invention Example 32 |
| 47 | 80 | 0.3 | 5 | 0.9 | 40 | 182 | 87 | 246 | 64 | Invention Example 33 |
| 48 | 80 | 0.3 | 10 | 0.9 | 40 | 181 | 87 | 245 | 64 | Invention Example 34 |
| 49 | 80 | 0.3 | 20 | 0.9 | 40 | 184 | 87 | 248 | 64 | Invention Example 35 |
| 50 | 80 | 0.3 | 30 | 0.9 | 40 | 188 | 92 | 253 | 65 | Invention Example 36 |
| 51 | 80 | 0.3 | 40 | 0.9 | 40 | 194 | 110 | 264 | 70 | Comparative Example 15 |

No. 42 and No. 44, which had no burr, were low in emission control performance (T80°C). No. 43 was high in emission control performance (T80°C) by virtue of burrs but experienced a significantly increased deterioration of the catalyst due to the absence of an oxide coating film. No. 45 to No. 50 were high in emission control performance (T80°C) by virtue of burrs and the deterioration of the catalyst was also able to be kept low. Additionally, the pressure loss was also able to be maintained at a low value. No. 51 had burrs considerably projecting from the catalyst layer (projecting from the catalyst layer by 20 $\mu$m), so that the pressure loss increased due to the generation of a turbulent flow and the emission control performance (T80°C) deteriorated due to the lowering of the reaction source effect.

(Example 5)

In the present example, a test was performed under conditions similar to those of Example 2 except that the average height of the burrs L was adjusted using a shape adjustment device.

[Table 5]

| No. | Oxide Coating Film | | Average height of burrs (μm) | Hole diameter (mm) | Aperture ratio (%) | Evaluation | | | | Note |
|-----|---------------------|---|------|------|------|------|------|------|------|------|
| | α-alumina (%) | Thickness (μm) | | | | T80°C (i) | Pressure loss (Pa) | T80°C after aging ② | Difference between before and after aging °C②-① | |
| 52 | 0 | 0 | 5 | 2 | 50 | 188 | 52 | 263 | 75 | Comparative Example 16 |
| 53 | 80 | 0.03 | 5 | 2 | 50 | 188 | 52 | 263 | 75 | Comparative Example 17 |
| 54 | 80 | 0.05 | 5 | 2 | 50 | 188 | 52 | 258 | 70 | Invention Example 37 |
| 55 | 80 | 0.1 | 5 | 2 | 50 | 189 | 52 | 254 | 65 | Invention Example 38 |
| 56 | 80 | 0.5 | 5 | 2 | 50 | 188 | 52 | 252 | 64 | Invention Example 39 |
| 57 | 80 | 10 | 5 | 2 | 50 | 187 | 52 | 250 | 63 | Invention Example 40 |
| 58 | 80 | 2.0 | 5 | 2 | 50 | 188 | 52 | 252 | 64 | Invention Example 41 |
| 59 | 80 | 2.5 | 5 | 2 | 50 | 188 | 52 | Foil Cracking | | Comparative Example 18 |
| 60 | 5 | 0.5 | 5 | 2 | 50 | 188 | 52 | 264 | 76 | Comparative Example 19 |
| 61 | 10 | 0.5 | 5 | 2 | 50 | 187 | 52 | 257 | 70 | Invention Example 42 |
| 62 | 30 | 0.5 | 5 | 2 | 50 | 188 | 52 | 253 | 65 | Invention Example 43 |
| 63 | 50 | 0.5 | 5 | 2 | 50 | 187 | 52 | 250 | 63 | Invention Example 44 |
| 64 | 100 | 0.5 | 5 | 2 | 50 | 188 | 52 | 250 | 62 | Invention Example 45 |

EP 4 368 286 B1

19

Regarding No. 53, the thickness of the oxide coating film merely reached 0.03 μm, so that the deterioration of the catalyst increased. Regarding No. 59, the thickness of the oxide coating film exceeded 2.0 μm, so that an evaluation of T80°C after aging was not possible due to the occurrence of foil cracking. It has been found that the formation of a 0.05 μm to 2 μm oxide coating film containing at least 10 mass% α-alumina enhances the emission control performance and makes it possible to decrease the pressure loss and the deterioration of the catalyst.

(Example 6)

In the present example, a test was performed under conditions similar to those of Example 3 except that the average height of the burrs L was adjusted using a shape adjustment device.

**EP 4 368 286 B1**

[Table 6]

| No. | Oxide coating film | | Average height of burrs (μm) | Hole diameter (mm) | Aperture ratio (%) | T80 °C (i) | Pressure loss (Pa) | Evaluation | | Note |
|---|---|---|---|---|---|---|---|---|---|---|
| | α-alumina (%) | Thickness (μm) | | | | | | T80°C after aging ② | Difference between before and after aging °C②-① | |
| 65 | 98 | 0.9 | 8 | 0.2 | 20 | 198 | 48 | 266 | 68 | Invention Example 46 |
| 66 | 98 | 0.9 | 8 | 0.5 | 20 | 195 | 48 | 262 | 67 | Invention Example 47 |
| 67 | 98 | 0.9 | 8 | 0.9 | 20 | 192 | 49 | 252 | 60 | Invention Example 48 |
| 68 | 98 | 0.9 | 8 | 1.1 | 20 | 191 | 50 | 249 | 58 | Invention Example 49 |
| 69 | 98 | 0.9 | 8 | 2.0 | 20 | 189 | 52 | 246 | 57 | Invention Example 50 |
| 70 | 98 | 0.9 | 8 | 3.0 | 20 | 191 | 53 | 251 | 60 | Invention Example 51 |
| 71 | 98 | 0.9 | 8 | 4.0 | 20 | 193 | 54 | 256 | 63 | Invention Example 52 |
| 72 | 98 | 0.9 | 8 | 5.0 | 20 | 206 | 55 | 272 | 66 | Comparative Example 20 |
| 73 | 98 | 0.9 | 8 | 2.5 | 3 | 206 | 48 | 275 | 69 | Comparative Example 21 |

(continued)

| No. | Oxide coating film α-alumina (%) | Thickness (μm) | Average height of burrs (μm) | Hole diameter (mm) | Aperture ratio (%) | T80 °C (i) | Pressure loss (Pa) | Evaluation T80°C after aging ② | Difference between before and after aging °C②-① | Note |
|---|---|---|---|---|---|---|---|---|---|---|
| 74 | 98 | 0.9 | 8 | 2.5 | 5 | 198 | 49 | 267 | 69 | Invention Example 53 |
| 75 | 98 | 0.9 | 8 | 2.5 | 10 | 194 | 51 | 259 | 65 | Invention Example 54 |
| 76 | 98 | 0.9 | 8 | 2.5 | 20 | 188 | 52 | 252 | 64 | Invention Example 55 |
| 77 | 98 | 0.9 | 8 | 2.5 | 30 | 187 | 52 | 250 | 63 | Invention Example 56 |
| 78 | 98 | 0.9 | 8 | 2.5 | 40 | 183 | 54 | 245 | 62 | Invention Example 57 |
| 79 | 98 | 0.9 | 8 | 25 | 50 | 183 | 55 | 245 | 62 | Invention Example 58 |
| 80 | 98 | 0.9 | 8 | 25 | 60 | 182 | 58 | 247 | 65 | Invention Example 59 |
| 81 | 98 | 0.9 | 8 | 2.5 | 70 | 181 | 59 | 250 | 69 | Invention Example 60 |
| 82 | 98 | 0.9 | 8 | 2.5 | 80 | 181 | 61 | Foil Cracking | | Comparative Example 22 |

Referring to Nos. 65 to 71, it has been found that providing burrs makes it possible to secure a desired emission control performance (T80°C) even though the average hole diameter D is small. Regarding No. 72, it was not possible to improve the emission control performance (T80°C) due to the excessively large average hole diameter D and the short total length of the burrs. Regarding No. 73, it was not possible to improve the emission control performance (T80°C) due to the excessively small aperture ratio and the short total length of the burrs. Regarding No. 82, the aperture ratio exceeded 70% and foil cracking of the metal foil was seen after aging, so that the deterioration of the catalyst was not evaluated.

Reference Signs List

1     catalytic converter
2     flat foil
3     corrugated foil
4     honeycomb body

## Claims

**1.** A honeycomb-type metal substrate (4) formed by alternately layering a metal flat foil (2) and a metal corrugated foil (3),

a plurality of holes (8) being formed in the metal flat foil (2) and the metal corrugated foil (3),
a burr (2A,3A) having a small height being formed on an edge of each hole (8),
among the metal flat foil (2) and the metal corrugated foil (3), at least surfaces of the burrs (2A, 3A) are covered with an oxide coating film containing $\alpha$-alumina,
**characterized in that**, when a triangle is drawn by connecting the centers of three adjacent holes (8) with lines and an area inside the triangle is defined as an entire area, and areas of parts where the triangle overlaps with the holes (8) are defined as hole areas, a ratio of the hole areas to the entire area is defined as an aperture ratio R, an average hole diameter of the plurality of holes (8) is defined as D, and an average height of the burrs (2A,3A) is defined as L, the following expressions [1] to [3] are satisfied

$$0.2 \text{ mm} \le D \le 4.0 \text{ mm} \quad [1]$$

$$5\% \le R \le 70\% \quad [2]$$

$$0.1 \text{ }\mu\text{m} \le L \le 30 \text{ }\mu\text{m} \quad [3].$$

**2.** The honeycomb-type metal substrate (4) according to claim 1, wherein
a tip end surface of each burr (2A,3A) is formed in a shape extending in a direction orthogonal to a projecting direction of the burr (2A,3A).

**3.** The honeycomb-type metal substrate (4) according to claim 2, wherein
the burrs (2A,3A) have narrow portions (50) each having a width smaller than the tip end surface.

**4.** The honeycomb-type metal substrate (4) according to any one of claims 1 to 3, wherein
the average height of the burrs (2A,3A) L satisfies the following expression [4],

$$0.5 \text{ }\mu\text{m} \le L \le 20 \text{ }\mu\text{m} \quad [4].$$

**5.** A catalytic converter (1) comprising:

the honeycomb-type metal substrate (4) according to any one of claims 1 to 3; and a catalyst layer (20) carried on the metal flat foil (2) and the metal corrugated foil (3), the average height of the burrs (2A, 3A) L being smaller than a thickness of the catalyst layer (20) or larger than the thickness of the catalyst layer (20) by a predetermined amount, and

the predetermined amount being 10 $\mu$m or less.

6. A catalytic converter (1) comprising:

the honeycomb-type metal substrate (4) according to claim 4; and
a catalyst layer (20) carried on the metal flat foil (2) and the metal corrugated foil (3), and the average height of the burrs (2A,3A) L being smaller than a thickness of the catalyst layer (20).

7. The honeycomb-type metal substrate (4) according to any one of claims 1 to 4, wherein the oxide coating film is in a range from 0.05 $\mu$m to 2 $\mu$m in thickness and contains at least 10 mass% or more $\alpha$-alumina.

8. The catalytic converter (1) according to claim 5 or 6, wherein the oxide coating film is in a range from 0.05 $\mu$m to 2 $\mu$m in thickness and contains at least 10 mass% or more $\alpha$-alumina.

## Patentansprüche

1. Wabenartiges Metallsubstrat (4), das durch abwechselndes Schichten einer flachen Metallfolie (2) und einer gewellten Metallfolie (3) ausgebildet wird,

wobei eine Mehrzahl von Löchern (8) in der flachen Metallfolie (2) und der gewellten Metallfolie (3) ausgebildet wird,
wobei ein Grat (2A, 3A) mit einer geringen Höhe an einem Rand jedes Lochs (8) ausgebildet wird,
zwischen der flachen Metallfolie (2) und der gewellten Metallfolie (3) wenigstens Oberflächen der Grate (2A, 3A) mit einem oxidischen Beschichtungsfilm bedeckt sind, der $\alpha$-Aluminiumoxid enthält,
**dadurch gekennzeichnet, dass**, wenn ein Dreieck durch Verbindung der Mittelpunkte von drei benachbarten Löchern (8) mit Linien ausgebildet wird und eine Fläche innerhalb des Dreiecks als eine gesamte Fläche definiert wird und Flächen von Teilen, wo das Dreieck mit den Löchern (8) überlappt, als Lochflächen definiert werden, ein Verhältnis der Lochflächen zu der Gesamtfläche als Öffnungsverhältnis R definiert wird, ein durchschnittlicher Lochdurchmesser der Mehrzahl von Löchern (8) als D definiert wird und eine durchschnittliche Höhe der der Grate (2A, 3A) als L definiert wird, die folgenden Ausdrücke [1] bis [3] erfüllt werden

$$0{,}2\ \mathrm{mm} \leq D \leq 4{,}0\ \mathrm{mm}\ [1]$$

$$5\ \% \leq R \leq 70\ \%\ [2]$$

$$0{,}1\ \mu\mathrm{m} \leq L \leq 30\ \mu\mathrm{m}\ [3].$$

2. Wabenartiges Metallsubstrat (4) nach Anspruch 1, wobei
eine spitze Endoberfläche jedes Grats (2A, 3A) in einer Form ausgebildet ist, die sich in einer Richtung orthogonal zu einer vorstehenden Richtung des Grats (2A, 3A) erstreckt.

3. Wabenartiges Metallsubstrat (4) nach Anspruch 2, wobei
die Grate (2A, 3A) schmale Abschnitte (50) aufweisen, die jeweils eine geringere Breite als die Spitzenendoberfläche aufweisen.

4. Wabenartiges Metallsubstrat (4) nach einem der Ansprüche 1 bis 3, wobei
die durchschnittliche Höhe der Grate (2A, 3A) L den folgenden Ausdruck [4] erfüllt, $0{,}5\ \mu\mathrm{m} \leq L \leq 20\ \mu\mathrm{m}\ [4]$

5. Katalysator (1), umfassend:

das wabenartige Metallsubstrat (4) nach einem der Ansprüche 1 bis 3; und eine Katalysatorschicht (20), die auf der flachen Metallfolie (2) und der gewellten Metallfolie (3) getragen wird, wobei die durchschnittliche Höhe der Grate (2A, 3A) L kleiner ist als eine Dicke der Katalysatorschicht (20) oder um eine vorbestimmte Menge größer ist als die Dicke der Katalysatorschicht (20), und
die vorbestimmte Größe 10 $\mu$m oder weniger ist.

6. Katalysator (1), umfassend:

das wabenartige Metallsubstrat (4) nach Anspruch 4; und
eine Katalysatorschicht (20), die auf der flachen Metallfolie (2) und der gewellten Metallfolie (3) getragen wird, wobei die durchschnittliche Höhe der Grate (2A, 3A) L kleiner ist als eine Dicke der Katalysatorschicht (20).

7. Wabenartiges Metallsubstrat (4) nach einem der Ansprüche 1 bis 4, wobei der oxidische Beschichtungsfilm in einem Bereich von 0,05 $\mu$m bis 2 $\mu$m in Dicke liegt und wenigstens 10 Massen-% oder mehr $\alpha$-Aluminiumoxid enthält.

8. Katalysator (1) nach Anspruch 5 oder 6, wobei der oxidische Beschichtungsfilm in einem Bereich von 0,05 $\mu$m bis 2 $\mu$m in Dicke liegt und wenigstens 10 Massen-% oder mehr $\alpha$-Aluminiumoxid enthält.

**Revendications**

1. Substrat de métal de type nid d'abeille (4) formé par une superposition alternée d'une feuille métallique plate (2) et d'une feuille métallique ondulée (3),

une pluralité de trous (8) étant formés dans la feuille métallique plate (2) et la feuille métallique ondulée (3), une bavure (2A, 3A) de faible hauteur étant formée sur un bord de chaque trou (8),
parmi la feuille métallique plate (2) et la feuille métallique ondulée (3), au moins des surfaces des bavures (2A, 3A) sont recouvertes d'un film de revêtement d'oxyde contenant de l'$\alpha$-alumine,
**caractérisé en ce que**, si l'on trace un triangle en reliant le centre de trois trous adjacents (8) par des lignes et que l'on définit une région à l'intérieur du triangle sous la forme d'une région entière, et si l'on définit des régions de trou dans les parties où le triangle chevauche les trous (8), si l'on définit un rapport entre les régions de trou et la région entière sous la forme d'un rapport d'ouverture R, si le diamètre moyen de la pluralité de trous (8) est défini par D et que la hauteur moyenne des bavures (2A, 3A) est définie par L, les expressions suivantes [1] à [3] sont satisfaites :

$$0{,}2 \text{ mm} \le D \le 4{,}0 \text{ mm} \qquad [1]$$

$$5 \text{ \%} \le R \le 70 \text{ \%} \qquad [2]$$

$$0{,}1 \text{ } \mu\text{m} \le L \le 30 \text{ } \mu\text{m} \qquad [3].$$

2. Substrat de métal de type nid d'abeille (4) selon la revendication 1, dans lequel
une surface d'extrémité de pointe de chaque bavure (2A, 3A) est façonnée selon une forme s'étendant dans une direction orthogonale à une direction de saillie de la bavure (2A, 3A).

3. Substrat de métal de type nid d'abeille (4) selon la revendication 2, dans lequel
les bavures (2A, 3A) ont des portions étroites (50) ayant chacune une largeur de dimension inférieure à la surface d'extrémité de pointe.

4. Substrat de métal de type nid d'abeille (4) selon l'une quelconque des revendications 1 à 3, dans lequel
la hauteur moyenne des bavures (2A, 3A) L satisfait l'expression suivante [4] :

$$0{,}5 \text{ } \mu\text{m} \le L \le 20 \text{ } \mu\text{m} \qquad [4].$$

5. Convertisseur catalytique (1) comprenant :

le substrat de métal de type nid d'abeille (4) selon l'une quelconque des revendications 1 à 3 ; et une couche de catalyseur (20) portée par la feuille métallique plate (2) et la feuille métallique ondulée (3), la hauteur moyenne des bavures (2A, 3A) L étant de dimension inférieure à l'épaisseur de la couche de catalyseur (20) ou de dimension supérieure à l'épaisseur de la couche de catalyseur (20) selon une valeur prédéterminée, et la valeur prédéterminée étant inférieure ou égale à 10 $\mu$m.

6. Convertisseur catalytique (1) comprenant :

le substrat de métal de type nid d'abeille (4) selon la revendication 4, et
une couche de catalyseur (20) portée par la feuille métallique plate (2) et la feuille métallique ondulée (3), la hauteur moyenne des bavures (2A, 3A) L étant inférieure à l'épaisseur de la couche de catalyseur (20).

7. Substrat de métal de type nid d'abeille (4) selon l'une quelconque des revendications 1 à 4, dans lequel le film de revêtement d'oxyde a une épaisseur située dans une plage allant de 0,05 $\mu$m à 2 $\mu$m et contient au moins 10 % en masse d'$\alpha$-alumine.

8. Convertisseur catalytique (1) selon la revendication 5 ou 6, dans lequel le film de revêtement d'oxyde a une épaisseur située dans une plage allant de 0,05 $\mu$m à 2 $\mu$m et contient au moins 10 % en masse d'$\alpha$-alumine.

FIG.1

AXIAL DIRECTION

FIG.2

FIG.3

FIG.4

BURR

PROJECTING DIRECTION OF BURR
(THICKNESS DIRECTION OF METAL
FOIL)

FIG.5

TIP END SURFACE OF BURR

EDGE OF BURR

CENTER OF
HOLE 8

8

FIG.6

FIG.7

FIG.8

## FIG.9

BURR

V2

SEI  15kV  WD10mm  SS40       x1,000    10 μm

## FIG.10

20

BURR WITH
SMALL HEIGHT
(NO CRUSH)

8

3A

2  2A

20

3

8

2A  20  2

**EP 4 368 286 B1**

**REFERENCES CITED IN THE DESCRIPTION**

**Patent documents cited in the description**

- JP 4975969 B
- JP 5199291 B
- JP 2005313083 A
- JP 2007203256 A